(19) Europäisches Patentamt
European Patent Office
Office européen des brevets

(11) **EP 2 221 930 B1**

(12) **EUROPEAN PATENT SPECIFICATION**

(45) Date of publication and mention
of the grant of the patent:
**03.04.2013 Bulletin 2013/14**

(51) Int Cl.:
***H01S 3/067*** *(2006.01)*     ***H01S 3/30*** *(2006.01)*
***C03C 13/04*** *(2006.01)*     ***C03C 14/00*** *(2006.01)*

(21) Application number: **10075059.5**

(22) Date of filing: **12.02.2010**

(54) **Optical fibre amplifier comprising nanostructures**

Optischer Faserverstärker mit Nanostrukturen

Amplificateur à fibre optique comprenant des nanostructures

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **20.02.2009 FR 0900773**

(43) Date of publication of application:
**25.08.2010 Bulletin 2010/34**

(73) Proprietor: **Draka Comteq B.V.**
**1083 HJ Amsterdam (NL)**

(72) Inventors:
 • **Burov, Ekaterina**
 **92100 Boulogne-Billancourt (FR)**
 • **Pastouret, Alain**
 **91300 Massy (FR)**
 • **Gonnet, Cédric**
 **75014 Paris (FR)**
 • **Collet, Christine**
 **91540 Mennecy (FR)**
 • **Cavani, Olivier**
 **91470 Angervilliers (FR)**

(74) Representative: **op den Brouw-Sprakel, Vera Stefanie Irene et al**
**Algemeen Octrooi- en Merkenbureau**
**P.O. Box 645**
**5600 AP Eindhoven (NL)**

(56) References cited:
**EP-A- 1 347 545**     **WO-A-2007/020362**
**JP-A- 2001 255 564**     **US-A1- 2005 135 759**
**US-A1- 2005 237 602**

• **PASTOURET A ET AL: "Nanoparticle doping process for improved fibre amplifiers and lasers" PROCEEDINGS OF THE SPIE - THE INTERNATIONAL SOCIETY FOR OPTICAL ENGINEERING, SPIE, PO BOX 10 BELLINGHAM WA 98227-0010 USA, vol. 7195, 26 January 2009 (2009-01-26), page 71951X(8pp.), XP009116595 ISSN: 0277-786X**
• **CEREYON A ET AL: "Raman amplification in nanoparticles doped glasses" JOURNAL OF NON-CRYSTALLINE SOLIDS, NORTH-HOLLAND PHYSICS PUBLISHING. AMSTERDAM, NL, vol. 354, no. 29, 1 July 2008 (2008-07-01) , pages 3458-3461, XP022697749 ISSN: 0022-3093 [retrieved on 2008-04-21]**

**Description**

The present invention relates to the field of optical fibres, and more specifically to an optical fibre amplifier capable of amplifying the optical signals transmitted. Fibre amplifiers can be used in particular as high-speed transmission line amplifiers.

Fibre amplifiers can be optical fibres doped with rare earth elements such as erbium. Such fibres are used in EDFAs, or Erbium Doped Fibre Amplifiers, and have a central core made up of a silica matrix comprising erbium doping elements, possibly combined with additional doping elements allowing for improved amplification. In a manner known *per se*, the optical amplification in an EDFA type optical fibre works by injecting into the optical fibre a pump signal that excites the ions ($Er^{3+}$) of the doping element. When a light signal passes through this portion of optical fibre, it de-excites the ions by laser effect, producing a photon that is completely identical to the incident photon. The light signal has therefore been doubled.

Fibre amplifiers can also use the Raman effect. Raman amplification does not use the atomic transitions of doped rare earth ions in the optical fibres, but is based on an exchange of energy by Raman scattering. Document JP 2001 255 564 A discloses a fiber for Roman amplification.

Raman scattering is a process of inelastic scattering of the incident light in the material, which brings into play interactions with atomic vibrations of the matrix. Every material has a spontaneous Raman emission spectrum at given wavelengths, that is, it behaves like a network of oscillators vibrating at a given frequency. The Raman spectrum of a glass, like that of a disordered amorphous material, is characterised by a large number of wavelengths forming a continuous spectrum over a wide frequency band. The intensity of the Raman emission increases with the input power applied to the material and becomes significant at a given power. This phenomenon is known as Stimulated Raman Scattering (SRS). It is thus possible, using the Raman emission of a material, to greatly amplify an optical signal by passing it through the material stimulated beforehand by an optical pump signal. In this type of amplification, a pump photon is converted to another lower energy photon at the same wavelength as the signal.

A pump signal with a lower frequency than the signal to be amplified is used to ensure the amplification of an optical signal by SRS, with the frequency difference between the pump signal and the transmitted signal being approximately equal to the vibration frequency of the medium (typically 13.2 THz for silica). Thus, for stimulated Raman amplification of a 1550 nm signal, a 1450 nm pump signal is injected into the silica fibre.

The Raman amplification gain G, expressed in dB, can be expressed as follows:

$$G = \frac{10}{\ln 10} C_R P_P L_{eff}$$

where

$C_R$ (in 1/km*W) is the optical fibre Raman coefficient:

$$C_R = \frac{g_R}{A_{eff}}$$

wherein $g_R$ is the intrinsic Raman gain of the material (in km/W), and $A_{eff}$ is the effective area of the optical fibre at the pump wavelength (in $km^2$);
where
$P_p$ is the power of the pump signal (in Watts),
$L_{eff}$ is the effective length of the optical fibre at the pump wavelength (in km), and can be specified by the equation

$$Leff = \left(\frac{1}{\alpha p}\right) \bullet \left(1 - e^{\frac{-\alpha_p}{L}}\right)$$

where $\alpha_p$ is the linear attenuation coefficient (in 1/km).

Thus, to increase the efficiency of the Raman amplification (i.e. the Raman amplification gain G), it is possible to either increase the intrinsic Raman gain of the material $g_R$, or to reduce the effective area of the optical fibre $A_{eff}$, which both give rise to an increased Raman coefficient $C_R$ or it is possible to reduce the optical losses at the pump wavelength, $\alpha_p$, (being the linear attenuation coefficient in 1/km) or to increase the power of the pump $P_p$.

Increasing the power of the pump ($P_P$) involves the use of costly lasers; this solution is ruled out when low-cost all-optical systems are sought. An increase in the intrinsic Raman gain $g_R$ can be achieved by optimising the composition of the core of the optical fibre, for example by adding germanium doping to a silica core or by producing optical fibres with a tellurite core for example, rather than silica. However, this solution leads to an increase in the optical transmission losses and poses a problem of compatibility with other optical fibres in an optical system using standard optical fibres.

Similarly, reducing the effective area ($A_{eff}$) of the fibre to improve the Raman amplification gain (G) leads to problems of compatibility with existing optical transmission system standards and causes an increase in the optical transmission losses.

It has also been proposed to improve the Raman amplification gain (G) by adding rare earth dopants to the core of the optical fibre, but this solution does not produce satisfactory results due to the absorption of the signal by the rare earth ions.

Finally, the production of a Raman fibre amplifier is based on a compromise between the Raman coefficient ($C_R$) on the one hand and the optical losses of the optical fibre on the other. In the literature, this compromise is often estimated by the Figure of Merit (FOM) expressed in $W^{-1}.dB^{-1}$, which represents the ratio between the Raman coefficient of the fibre ($C_R$) expressed in $W^{-1}.km^{-1}$ and the optical losses in the optical fibre ($\alpha_p$) expressed in $dB.km^{-1}$ at the wavelength of the pump. Typically, for standard single-mode fibres (with a silica core containing less than 5 wt% Ge with an effective area of 80 $\mu m^2$) intended for Raman amplification, the Raman FOM is limited to 3.2 $W^{-1}.dB^{-1}$.

There is therefore a need for a fibre amplifier that has an improved Raman FOM and is still compatible with other standard optical fibres.

To this end, the invention proposes exploiting, for optical fibre amplifiers, the phenomenon of Surface Plasmon Resonance (SPR) of metallic nanostructures arranged in a dielectric.

An electromagnetic wave such as light propagating in the optical fibre can polarise the electron cloud surrounding nanostructures that are present in the core of the optical fibre, thus creating coherent collective oscillation (known as "surface plasmon"). Thus, when a wavelength is injected under resonance conditions with the oscillation wavelength of this polarised cloud, the energy can be transferred to this wavelength. The resonance wavelength of the nanostructures can be adjusted and depends on their shape and size and the nature of the metal of the nanostructure.

The phenomenon of Surface Plasmon Resonance (SPR) has already been observed.

For example, the publication "Optical Properties of Gold Nanorings" by J. Azipura et al, Physical Review Letters, Vol. 90, No. 5, 7 February 2003, describes the optical response of ring-shaped gold nanoparticles arranged in a glass matrix.

The publications "Nanoengineering of optical resonances" by S.J. Oldenburg et al., Chemical Physics Letters, 22 May 1998, pp. 243-247, and "A Hybridation Model for the Plasmon Response of Complex Nanostructures" by E. Prodan et al., Science, Vol. 302, 17 October 2003, describe different shapes and compositions of nanoparticles and the resulting optical resonance.

The publication "Symmetry breaking in individual plasmonic nanoparticles" by Hui Wang et al, PNAS, Vol. 103, No. 29, 18 July 2006, describes nanoparticles composed of a dielectric core and a metallic shell. This publication describes more specifically the impact of the size of the metallic shell of the nanoparticles on the surface plasmon resonance shift.

R.L. Garell's publication "Surface-Enhanced Plasmon Raman Spectroscopy", in Analytical Chemistry, 1989, 61, pp. 401-411, describes a molecule characterisation technique using SRS amplification with silver nanoparticles in solution.

Furthermore, the publications "Surface plasmon polariton modified emission of erbium in a metallodielectric grating" by J. Kalkman et al., Applied Physics Letters, Vol. 83, No. 1, 7 July 2003, "Coupling of Er ions to surface plasmons on Ag" by J. Kalkman et al., Applied Physics Letters, Vol. 86, 2005, 041113-1-3, and "Plasmon-enhanced erbium luminescence" by H. Mertens et al., Applied Physics Letters, Vol. 89, 2006, 211107-1-3, describe an increase in the light intensity emitted by the erbium ions arranged in proximity to silver nanoparticles. It is thus possible to reduce the thermal effects in a planar guide.

Metallic nanoparticles have also been used for optical sensors. For example, documents US-A-6,608,716 and US-A-7,123,359 describe optical sensors comprising microcavities constituted of a dielectric substance doped with metal, semi-metal and/or semi-conductor atoms and comprising a plurality of nanoparticles aggregated to form a fractal structure. Document US-A-6,807,323 describes an optical sensor using the phenomenon of Surface Plasmon Resonance (SPR) between a thin conducting film and a thin dielectric film doped with rare earth elements or transition metals.

The phenomenon of Surface Plasmon Resonance (SPR) has not however been used to improve the Raman gain of a fibre amplifier. The manufacturing constraints of optical fibres impose choices on the nature, size and shape of the incorporated nanostructures.

Furthermore, optical fibres comprising nanoparticles are known in the prior art. For example, documents EP-A-1 347 545 or WO-A-2007/020362 describe optical fibres comprising nanoparticles in the core of the optical fibre. The nanoparticles described in these documents comprise a rare earth doping element and at least one element improving the amplification of the signal, such as aluminum, lanthanum, antimony, bismuth or other.

These documents do not however describe metallic nanoparticles allowing for the creation of a phenomenon of Surface Plasmon Resonance (SPR) in the core of an optical fibre.

Thus, none of the documents of the prior art describes an optical fibre comprising metallic nanostructures allowing for the creation of a phenomenon of Surface Plasmon Resonance (SPR) in the core of the optical fibre in order to allow for an increase in the Raman gain in the optical fibre.

The invention relates to a stimulated Raman effect optical fibre amplifier comprising a core capable of ensuring the transmission of an optical signal and a cladding surrounding the core capable of confining the optical signal transmitted in the core, the core comprising a dielectric matrix capable of vibrating at a given frequency under the effect of a pump signal such that the optical signal transmitted is amplified by Raman effect, **characterized in that** the optical fibre comprises at least one type of metallic nanostructure capable of generating a surface plasmon resonance in the optical fibre, the metallic nanostructures having a shape and composition such that the frequency of their surface plasmon resonance corresponds to the frequency of the pump signal and/or the frequency of the optical signal transmitted in the optical fibre, at least one of the dimensions of said metallic nanostructures being comprised between 1 nm (nanometer) and 20 nm (nanometer), and the total volume of the metallic nanostructures being less than 2% of the total volume of the core of the optical fibre.

According to an embodiment, the metallic nanostructures are arranged in the core of the optical fibre. The metallic nanostructures can then have a shape and a composition such that the bandwidth of their surface plasmon resonance is greater than the vibration frequency of the dielectric matrix of the core of the optical fibre.

According to an embodiment, the metallic nanostructures are arranged in a ring of the cladding surrounding the core of the optical fibre; the optical signal is then transmitted in the core of the optical fibre and the pump signal is transmitted in the ring.

According to an embodiment, the dielectric matrix of the core is silica based; the dielectric matrix of the core can be doped with an element chosen from germanium (Ge), phosphorus (P), fluorine (F), boron (B), aluminum (Al), tantalum (Ta), tellurium (Te) or a combination thereof.

According to an embodiment, the metallic nanostructures comprise a metal chosen from gold (Au), silver (Ag), copper (Cu), aluminum (Al), tungsten (W), nickel (Ni), palladium (Pd), rhodium (Rh), iridium (Ir), ruthenium (Ru), molybdenum (Mo), osmium (Os), platinum (Pt) or a combination thereof.

According to an embodiment, the metallic nanostructures have a melting temperature greater than or equal to 950°C, and can have an evaporating temperature greater than or equal to 2100°C.

According to an embodiment, the metallic nanostructures have a spherical shape with a diameter comprised between 1 nm (nanometer) and 10 nm (nanometer).

According to another embodiment, the metallic nanostructures have an oval shape, the small diameter (a) being comprised between 1 nm (nanometer) and 10 nm (nanometer). The large diameter is denoted (b). The ratio of the large diameter to the small diameter (b/a) according to this embodiment being comprised between 1 and 2000.

According to another embodiment, the metallic nanostructures have a dielectric core surrounded by an external metallic shell with an outer diameter comprised between 1 nm (nanometer) and 20 nm (nanometer) and a thickness of the metallic shell of less than 5 nm (nanometer), the ratio between the diameter of the dielectric core and the outer diameter of the metallic nanostructure being comprised between 0.5 and 1.

According to another embodiment, the metallic nanostructures have a metallic core, an internal dielectric shell and an external metallic shell, with an outer diameter of the metallic nanostructure comprised between 1 nm (nanometer) and 20 nm (nanometer) and a thickness of the external metallic shell of less than 5 nm (nanometer).

According to an embodiment, the optical fibre according to the invention has a Raman Figure of Merit (FOM) greater than 10 $W^{-1}.dB^{-1}$ for a fibre length of less than 500 m, the Raman Figure of Merit being defined as the ratio between the Raman coefficient ($C_R$) of the optical fibre and the losses in the fibre, the Raman coefficient ($C_R$) of the optical fibre being defined as the ratio between the intrinsic Raman gain ($g_R$) of the core material and the effective area ($A_{eff}$) of the optical fibre at the pump wavelength. According to an embodiment, the Raman Figure of Merit (FOM) is greater than 20 $W^{-1}.dB^{-1}$ for a fibre length of less than 500 m.

The invention relates to an optical amplifier or a laser comprising at least one portion of optical fibre according to the invention.

Further characteristics and advantages of the invention will become apparent on reading the following description of the embodiments of the invention, given by way of example and with reference to the attached drawings, in which:

- Figure 1 schematically shows the phenomenon of surface plasmon resonance;
- Figure 2 schematically shows a standard optical fibre amplifier using the Raman effect;

- Figure 3 schematically shows an embodiment of a Raman optical fibre amplifier according to the invention;
- Figure 4 schematically shows a first example of a nanostructure in an optical fibre according to the invention;
- Figure 5 schematically shows a second example of a nanostructure in an optical fibre according to the invention;
- Figure 6 schematically shows a third example of a nanostructure in an optical fibre according to the invention;
- Figure 7 schematically shows an example of production of an optical fibre according to the invention.

The invention will be described below with reference to a stimulated Raman effect (SRS) fibre amplifier. Typically, an optical fibre is composed of an optical core, having the function of transmitting and, if applicable, amplifying an optical signal, and an optical cladding, having the function of confining the optical signal in the core. To this end, the refractive indexes of the core $n_c$ and of the cladding $n_g$ are such that $n_c > n_g$. For a Raman effect fibre amplifier, the core is typically made of germanium-doped silica and the cladding is typically made of non-doped silica. It is however understood that other dopants can be used depending on the desired optical properties as long as the transmission and confinement functions are ensured.

The invention proposes incorporating metallic nanostructures in the optical fibre in order to generate Surface Plasmon Resonance (SPR) in the optical fibre. By "nanostructure" is meant an assembly of several hundred to several thousand atoms and/or molecules, resulting in an object with at least one dimension that is nanometric, between 1 and 100 nanometres, and that has specific physico-chemical properties. By "metallic nanostructures" is meant nanostructures that comprise at least one assembly of metallic atoms. By "type of nanostructure" is meant nanostructures having a shape, size and composition such that the frequency of their surface plasmon resonance ($\omega_{plasmon}$) is defined and controlled.

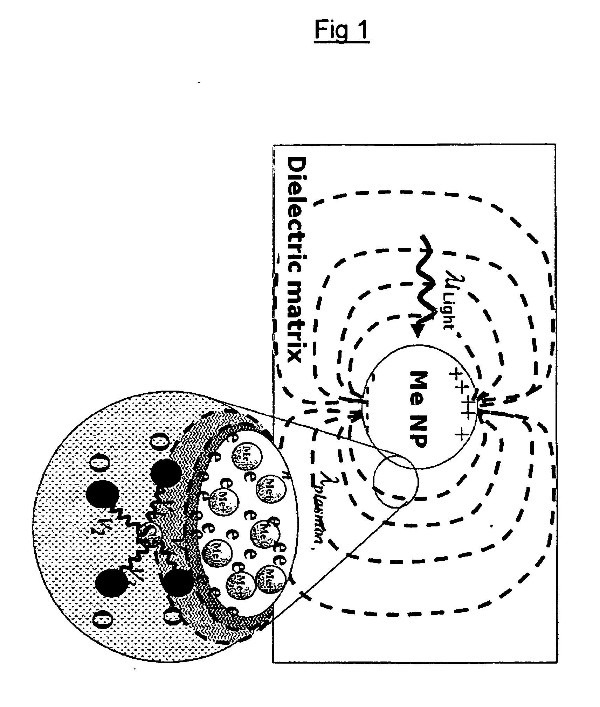

The phenomenon of surface plasmon resonance (SPR) is schematically shown in Figure 1. In a metal, the electrons are largely free in their movements with little interaction with their respective nuclei due to a Coulomb shielding effect. At a nanoscopic level, the electric field of an incident light wave will induce, at the metallic/dielectric interface, a polarisation of the electrons relative to the ionic nuclei of the metallic atoms. A net charge is thus produced and the electrons can oscillate coherently at a frequency ($\omega_{plasmon}$) that depends on the nature of the metal and the shape and size of the nanostructure. When the nanostructure is correctly chosen (geometry, shape, size, composition), the electron surface polarised in this way can concentrate energy and amplify local electric fields around the nanostructure.

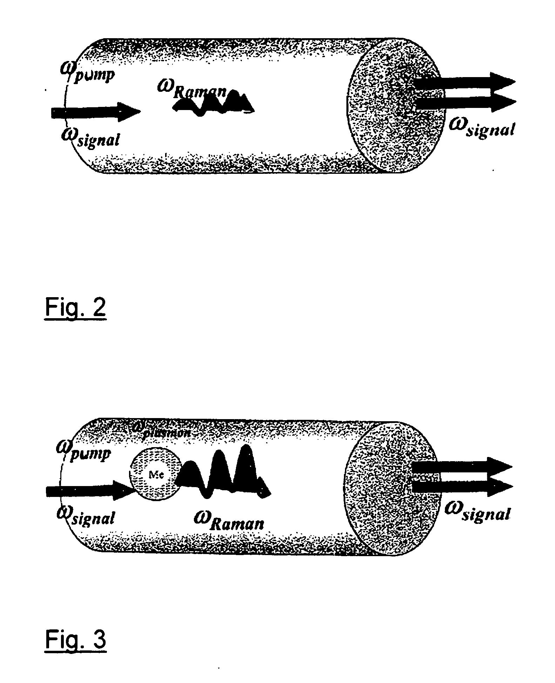

Figure 2 shows a standard Raman fibre amplifier. The standard optical fibre amplifier comprises a core composed of a dielectric matrix capable of transmitting a signal that propagates at a given frequency ($\omega_{signal}$) and amplifying that signal by Raman effect under the effect of a pump signal emitted at a given frequency ($\omega_{pump}$) Thus, the vibration frequency ($\omega_{Raman}$) of the core matrix is determined by its composition and chosen in such a way that a portion of the energy from the pump is transmitted by Raman effect (Ps) to signal frequency ($\omega_{signal}$) This energy transmitted to the signal is proportional to:

$$P_s(\omega_s) \propto N\sigma_{raman} I_p(\omega_{pump})$$

where

N is the number of Raman-active vibrations of the matrix;
$\sigma_{Raman}$ is the effective Raman cross-section of the matrix (it is proportional to the Raman coefficient $g_R$);
$I_P(\omega_{pump})$ is the incident intensity of the pump signal.

Figure 3 shows an optical fibre according to the invention. The optical fibre amplifier according to the invention comprises a core composed of a dielectric matrix capable of transmitting a signal that propagates at a given frequency ($\omega_{signal}$) and amplifying that signal by Raman effect under the effect of a pump signal emitted at a given frequency ($\omega_{pump}$). Thus, the vibration frequency ($\omega_{Raman}$) of the core matrix is determined by its composition and chosen in such a way that a portion of the energy from the pump is transmitted by Raman effect (Ps) to the signal frequency ($\omega_{signal}$). The optical signal amplified through the Raman effect according to the invention is intensified by the introduction of metallic nanostructures into the optical fibre. This effect is due to two phenomena:

- the increase in the effective Raman cross-section of the matrix ($\sigma_{Raman}$) by a factor of approximately 100 due to the change in the environment of the bonds in the matrix ($\sigma_{SPR} > \sigma_{Raman}$);
- the concentration of the electromagnetic field in the vicinity of the metallic nanostructure.

In this case, the portion of the pump energy transmitted by Raman effect (Ps) to the signal frequency ($\omega_{signal}$) is proportional to:

$$P_S(\omega_s) \propto N\sigma_{SPR} F^2(\omega_{signal}) F^2(\omega_{pump}) I_P(\omega_{pump})$$

where

N is the number of Raman-active vibrations of the matrix;

$\sigma_{SPR}$ is the effective Raman cross-section of the matrix modified by the presence of the nanostructures;

$I_P(\omega_{pump})$ is the incident intensity of the pump signal;

$F(\omega_{pump})$ is the factor of the increase in the amplitude of the local electromagnetic field in the vicinity of a metallic nanostructure at the pump frequency;

$F(\omega_{signal})$ is the factor of the increase in the amplitude of the local electromagnetic field in the vicinity of a metallic nanostructure at the signal frequency.

In theory, the factors F can be greater than 1000 and depend on the fibre core material, that is, the dielectric properties of the matrix, the shape and size of the metallic nanostructures, and the nature of the metal (Ag, Au or other).

Thus, the total increase in the Raman amplification linked to the introduction of the metallic nanostructures according to the invention results in the increase of the following effects: increase in the effective Raman cross-section $\sigma_{SPR}$, increase in the amplitude of the local electromagnetic field in the vicinity of the metallic nanostructures at the pump $F(\omega_{pump})$ and/or signal $F(\omega_{signal})$ frequencies.

Depending on the application envisaged, the size, shape and nature of the metallic nanostructures introduced into the matrix of the core of the optical fibre according to the invention can be adapted to resonate ($\omega_{plasmon}$) with either the pump ($\omega_{pump}$) or with the signal transmitted ($\omega_{signal}$), or with both. To obtain simultaneous resonance with the pump and the signal, the nanostructures introduced into the core of the optical fibre according to the invention must meet an additional condition: the resonance bandwidth of the nanostructures must be greater than the Raman vibration frequency of the matrix of the fibre core ($\omega_{Raman}$). This embodiment is advantageous as it allows for a maximum increase ($\sim F^4$) in the Raman effect.

The nanostructures are therefore chosen by their size, geometry, shape, nature and concentration, on the one hand so that the maximum surface plasmon resonance (SPR) effect occurs at a chosen, controlled frequency, and on the other hand in order not to perturb in the transmission of the optical signal in the fibre. Thus, a fibre according to the invention can have a Raman FOM greater than 10 $W^{-1}.dB^{-1}$, or even greater than 20 $W^{-1}.dB^{-1}$.

According to the embodiments, the metallic nanostructures can be introduced into the core of the optical fibre and/or into the cladding, particularly in a ring of the cladding surrounding the core. If metallic nanostructures are introduced both into the core and into the optical cladding of the optical fibre, it is possible to choose different types of nanostructure, that is, the size, composition, geometry and shape of the nanostructures introduced into the core can be different from the size, composition, geometry and shape of the nanostructures introduced into the optical cladding.

If metallic nanostructures are introduced into a ring surrounding the core of the optical fibre, the pump signal can be transmitted in the ring and the nanostructures will be specifically chosen to resonate ($\omega_{plasmon}$) with the pump ($\omega_{pump}$). The optical signal to be amplified is still transmitted in the core.

The presence of metallic nanostructures in the core of the optical fibre and/or in a ring surrounding the core has an impact on the opto-geometric conditions of the optical fibre and modifies the signal transmission conditions.

Firstly, it is necessary to limit the optical losses caused by the metallic nanostructures, linked to their size and their concentration in the optical fibre. The introduction of metallic nanostructures into the core of the optical fibre or near the core - in a ring directly surrounding the core - modifies the effective refractive index of the core and can lead to an increase in the optical losses through scattering. Moreover, the metallic nanostructures incorporated into the optical fibre can modify the physico-chemical properties of the matrix of the core and of the optical cladding, in particular its viscosity, which can render the material incompatible with the production constraints of the fibres, in particular fibre-drawing temperatures. The inventors have thus established that, in order to retain a material that can be drawn in standard industrial conditions and obtain an optical fibre with limited losses, the main conditions are that:

- one of the nanoscopic dimensions of the metallic nanostructures is less than 20 nm (nanometer);
- the concentration of the metallic nanostructures in the optical fibre is less than 2% of the volume of the core.

If metallic nanostructures are only introduced in a ring of the optical cladding and not in the core of the optical fibre, the optical losses will be reduced but the surface plasmon resonance (SPR) will only be able to occur with the pump signal and not the transmitted signal.

According to the invention, metallic nanostructures comprising a metal chosen from gold (Au), silver (Ag), copper (Cu), aluminum (Al), tungsten (W), nickel (Ni), palladium (Pd), rhodium (Rh), iridium (Ir), ruthenium (Ru), molybdenum (Mo), osmium (Os), platinum (Pt) or a combination thereof are highly suitable. Such nanostructures have a high melting temperature, preferably above 950°C and preferably at the very least an evaporating temperature greater than or equal to 2100°C, allowing for fibre-drawing while retaining the nanostructures in the silica-based matrix of the optical fibre. These can liquefy during fibre-drawing but do not evaporate. The nanostructures used also have good chemical oxidation stability and a high electron density, guaranteeing the presence of a sufficiently large electron cloud for the occurrence of the phenomenon of surface plasmon resonance under the effect of a light signal.

The dielectric matrix of the central core of the optical fibre can be silica-based, which can be doped with an element chosen from germanium (Ge), phosphorus (P), fluorine (F), boron (B), aluminum (Al), tantalum (Ta), tellurium (Te) or a combination thereof.

Table 1 below gives the melting and evaporating temperatures of the metals that can be used for the nanostructures introduced into an optical fibre according to the invention.

Table 1

| Metal | Melting T, °C | Evaporating |
|---|---|---|
| Au | 1065 | 3054 |
| Ag | 961 | 2162 |
| Cu | 1085 | 2554 |
| Al | 660 | 2519 |
| W | 3407 | 5658 |
| Ni | 1453 | 2913 |
| Pd | 1550 | 2963 |
| Rh | 1966 | 3695 |
| Ir | 2443 | 4428 |
| Ru | 2250 | 4150 |
| Mo | 2617 | 4639 |
| Os | 3027 | 5009 |
| Pt | 1772 | 3825 |

According to the invention, the shape of the metallic nanostructures can vary, in order to adjust their SPR resonance frequency ($\omega_{plasmon}$) depending on their size, their nature and the application envisaged; they can be approximately spherical or have an oval shape or a core-shell(s) type structure. An oval or core-shell(s) shape will allow for an increase in the contact surface with the dielectric matrix of the material of the fibre and lead to an increase in the electron density around the nanostructures.

The intensity, wavelength and range of the surface plasmon resonance of the nanostructures are essentially linked to the choice of the parameters (nature of the metal, geometry, concentration) of the nanostructures introduced. For example, the metallic nanostructures must have at least one dimension that is significantly smaller than the wavelength of the excitation light signal. For spherical nanostructures, the diameter can be between 1 nm (nanometer) and 10 nm (nanometer); for oval nanostructures, the small diameter can be between 1 nm (nanometer) and 10 nm (nanometer). For core-shell(s) type nanostructures, the outer diameter is less than 20 nm (nanometer) and the thickness of a metallic shell can be limited to 5 nm (nanometer). The diameter of the core-shell(s) type nanostructures can be larger than that of the spherical or oval nanostructures as the core-shell(s) type nanostructures are partly made up of dielectric and consequently absorb the light signal less than the spherical or oval nanostructures, which are made entirely of metal. The optical losses caused by core-shell(s) type nanostructures are therefore of the same order as the optical losses caused by spherical or oval nanostructures despite a larger outer diameter.

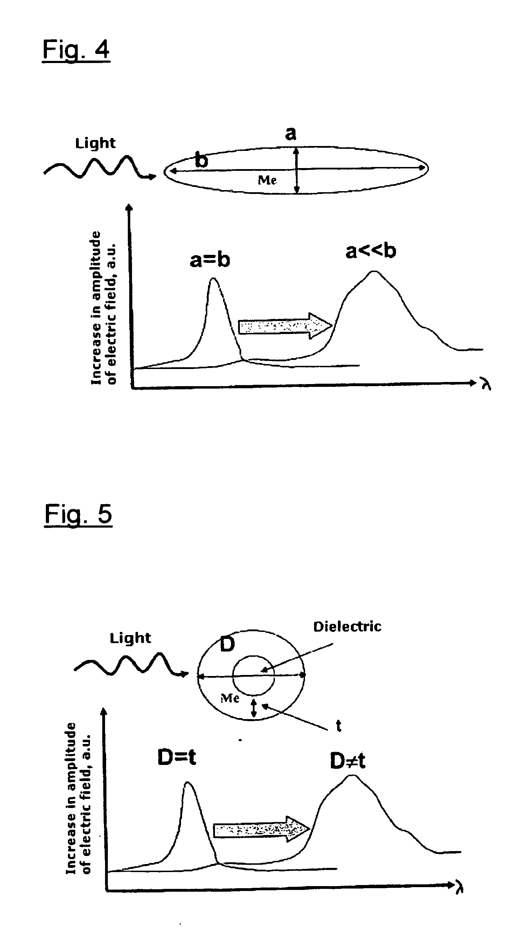

Figure 4 shows a first example of nanostructures that can be used in an optical fibre according to the invention.

For spherical metallic nanostructures (a=b), the light signal propagating in the optical fibre causes a phenomenon of surface plasmon resonance (SPR) that leads to an increase in the amplitude of the electric field of the light wave at a given wavelength depending on the metallic composition. If the nanostructure is oval (a<<b), the surface plasmon resonance frequency ($\omega_{plasmon}$) will be shifted towards the lowest frequencies and widened as shown in the graph in Figure 4.

For example, for gold metallic nanostructures, the ovalisation of the nanostructure with a ratio between the large diameter and the small diameter (b/a) of less than 2000, preferably less than 1000, will allow for the surface plasmon resonance frequency to be shifted towards the band used in telecommunications (band C in particular). Oval nanostructures therefore preferably have a small diameter a of between 1 nm (nanometer) and 10 nm (nanometer) and a large diameter b preferably comprised between 10 nm (nanometer) and 1500 nm (nanometer) (length comparable to the wavelength of a telecoms optical signal). The ovalisation of the metallic nanostructures can be controlled by adjusting the production parameters of the optical fibre, particularly during the fibre-drawing stage. For example, for gold, the melting temperature of gold is 1064°C, whilst fibre-drawing takes place at a temperature comprised between 1700°C and 2200°C. Consequently, during fibre-drawing, the gold nanostructures will behave viscously and will be easily deformable during the homothetic transformation of the fibre perform.

In addition, to the frequency shifting of the SPR, the ovalisation of the metallic nanostructures allows for a widening of the surface plasmon resonance band. Efficient Raman amplification can therefore be ensured on a wider bandwidth, particularly for WDM (Wavelength Division Multiplexing) type applications, by ensuring maximum Raman effect by simultaneous amplification of the pump and the signal.

Figure 5 shows a second example of nanostructures that can be used in an optical fibre according to the invention.

This example proposes core-shell type nanostructures with a dielectric core and a metallic external shell having an outer diameter D and a shell thickness t. When the diameter D is equal to the thickness t, this corresponds to the case of a spherical metallic nanostructure. When the nanostructure has a core-shell form, the surface plasmon resonance frequency ($\omega_{plasmon}$) is shifted towards the lowest frequencies and spread out relative to a spherical metallic nanostructure, as shown in the graph in Figure 5.

For example, nanostructures having a silica core and a gold layer can be used. It is however understood that the dielectric of the core of the nanoparticle can be different from that of the dielectric matrix of the optical fibre. Optimisation of the diameter D and the thickness of the shell t make it possible to control the surface plasmon resonance (SPR) frequency. A diameter to thickness ratio (D/t) of about 10 allows for the achievement of an SPR frequency within the band used in telecommunications. Core-shell type nanostructures preferably have a diameter D comprised between 1 and 20 nm (nanometer) and a shell thickness t of less than 5 nm (nanometer), chosen so that the ratio between the diameter of the non-metallic core (D-2t) and the total diameter of the nanostructure (D) is comprised between 0.5 and 1, preferably greater than 0.8. In addition to the SPR frequency shifting, core-shell type metallic nanostructures allow for a widening of the surface plasmon resonance band. Efficient Raman amplification can therefore be ensured on a wider bandwidth, particularly for WDM type applications, by ensuring maximum Raman effect by simultaneous amplification of the pump and the signal.

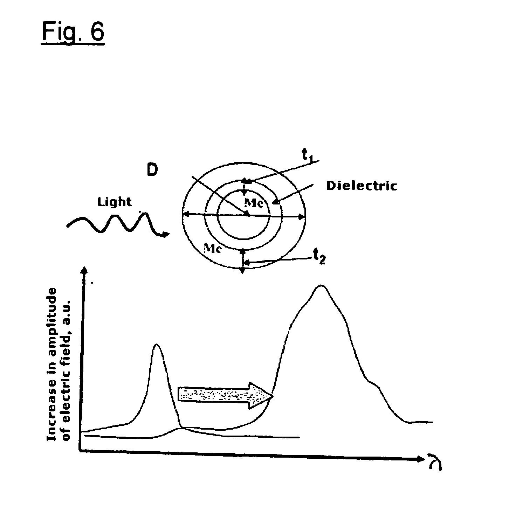

Figure 6 shows a third example of nanostructures that can be used in an optical fibre according to the invention.

This example proposes complex nanostructures with a metallic central core, an internal dielectric shell and an external metallic shell. The nanostructure has an outer diameter D, a thickness $t_1$ of the internal dielectric shell and a thickness $t_2$ of the external metallic shell. When the nanostructure has this type of form, the surface plasmon resonance frequency ($\omega_{plasmon}$) is shifted towards the lowest frequencies and spread out relative to a spherical nanostructure, as shown in the graph in Figure 6. In addition, the intensity of the electric field of the light wave is increased. Such metallic nanostructures can advantageously be used for WDM type applications.

For example, nanostructures having a gold metallic core, a silica internal shell and a gold external shell can be used. The total diameter D of these nanostructures is preferably comprised between 1 and 20 nm (nanometer) and the thickness of the external metallic shell $t_2$ is less than 5 nm (nanometer). The optimisation of the diameter D and the thickness of each shell $t_1$ and $t_2$ make it possible to control the SPR frequency ($\omega_{plasmon}$) and the resonance bandwidth. It is however understood that the dielectric of the internal shell of the nanoparticle can be different from that of the dielectric matrix of the fibre and that the metals of the core and of the external shell can be different.

Other examples of metallic nanostructures could also be envisaged. In particular, it is possible to incorporate several types of metallic nanostructure into a single optical fibre, i.e. spherical and/or oval nanostructures as well as core-shell(s) type nanostructures, as long as concentration by volume remains below 2% of the volume of the core of the optical fibre for the reasons set out above. When different types of metallic nanostructure are introduced into the optical fibre, each type of nanostructure can comprise a different metal, shape and size from the other types.

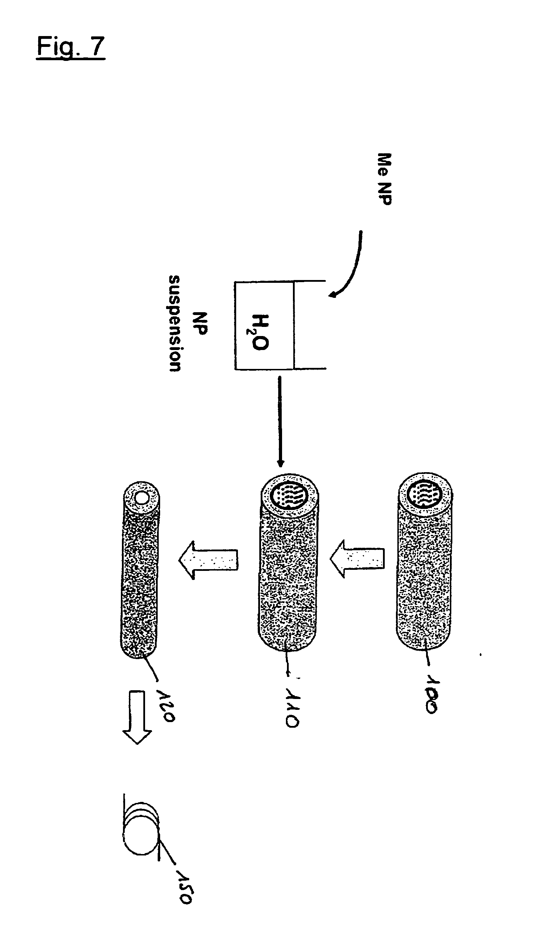

Figure 7 shows an example of production of a fibre according to the invention.

The metallic nanostructures (Me NP) can be produced by chemical or physical synthesis, such as a sol-gel method known *per se*. The core-shell(s) type metallic nanostructures can be produced by forming nanoparticles by chemical or physical synthesis, resulting in a powder of nanoscopic grains, and then by making one or successive deposits on the powder by chemical or physical deposition. The nanostructures are then dispersed in an aqueous solution. A stable suspension of nanostructures is thus obtained.

A silica tube 100 with a porous core and a cladding formed by a silica tube is also produced by MCVD (Modified Chemical Vapour Deposition). The solution of nanostructures in stable suspension is then used to impregnate 110 the porous core of the silica tube, for example during an MCVD operation, to form the core of the primary preform and, optionally, a ring.

Next there is a vitrification and extrusion operation 120 to obtain the primary preform, and finally an overcladding operation to form a final preform that can be used on a fibre-drawing tower to draw the optical fibre 150.

An optical fibre has thus been produced, comprising a core and, if applicable, a ring, composed of a dielectric matrix and comprising metallic nanostructures allowing for the occurrence of a phenomenon of surface plasmon resonance (SPR) to amplify a pump and/or signal wavelength.

Depending on the applications envisaged, the power of the pump can be reduced and less costly equipment can thus be used and/or the length of the fibre amplifier can be reduced to make the equipment more compact.

For example, whereas a standard optical fibre amplifier having a heavily germanium-doped (in the region of 20 to 25 wt% of Ge with an effective area of 10 $\mu m^2$) silica-based core will have a Raman FOM of 8 $W^{-1}.dB^{-1}$ for an optimum fibre length of 900 m, the optical fibre according to the invention can have, for the same effective area, a Raman FOM much greater than 10 $W^{-1}.dB^{-1}$, or even greater than 20 $W^{-1}.dB^{-1}$, for an optimum fibre length of less than 500 m.

Such an optical fibre can be used in an optical amplifier with significant amplification gain and improved compactness relative to the state of the art. Such an optical fibre can also be used in a laser with improved compactness.

Of course, the present invention is not limited to the embodiments or applications described by way of example. In particular, the dielectric matrix can be silica or any other composition such as germanium oxide or tellurite for example, and can include dopants such as for example germanium, phosphorus, antimony and thallium.

## Claims

1. Stimulated Raman effect SRS amplifying optical fibre comprising a core capable of ensuring the transmission of an optical signal and an optical cladding surrounding the core and capable of confining the optical signal transmitted in the core, the core being composed of a dielectric matrix capable of vibrating at a given frequency $\omega_{Raman}$ under the effect of a pump signal such that the optical signal transmitted is amplified by Raman effect, **characterized in that** the optical fibre comprises at least one type of metallic nanostructure capable of generating a surface plasmon resonance SPR in the optical fibre, the metallic nanostructures having a shape and a composition such that the frequency of their surface plasmon resonance $\omega_{plasmon}$ corresponds to the frequency of the pump signa $\omega_{pump}$ and/or the frequency of the optical signal transmitted in the optical fibre $\omega_{signal}$, at least one of the dimensions of said metallic nanostructures being comprised between 1 nm and 20 nm, and the total volume of the metallic nanostructures being less than 2% of the total volume of the core of the optical fibre.

2. The optical fibre according to claim 1, in which the metallic nanostructures are arranged in the core of the optical fibre.

3. The optical fibre according to claim 2, in which the metallic nanostructures have a shape and a composition such that the bandwidth of their surface plasmon resonance is greater than the vibration frequency of the dielectric matrix $\omega_{Raman}$ of the core of the optical fibre.

4. The optical fibre according to one of claims 1 to 3, in which the metallic nanostructures are arranged in a ring of the cladding surrounding the core of the optical fibre, the optical signal being transmitted in the core of the optical fibre and the pump signal being transmitted in the ring.

5. The optical fibre according to one of claims 1 to 4, in which the dielectric matrix of the core is silica-based.

6. The optical fibre according to one of claims 1 to 4, in which the dielectric matrix of the core is silica-based, doped with an element chosen from germanium, phosphorus, fluorine, boron, aluminum, tantalum , tellurium or a combination thereof.

7. The optical fibre according to one of the previous claims, in which the metallic nanostructures comprise a metal chosen from gold, silver, copper, aluminum, tungsten, nickel (Ni), palladium, rhodium, iridium, ruthenium, molybdenum, osmium, platinum or a combination thereof.

8. The optical fibre according to one of the previous claims, in which the metallic nanostructures have a melting temperature equal to or greater than 950°C.

9. The optical fibre according to one of the previous claims, in which the metallic nanostructures have an evaporating temperature equal to or greater than 2100°C.

10. The optical fibre according to one of claims 1 to 9, in which the metallic nanostructures have a spherical shape with a diameter comprised between 1 nm (nanometer) and 10 nm.

11. The optical fibre according to one of claims 1 to 9, in which the metallic nanostructures have an oval shape, the small diameter a being between 1 nm and 10 nm and the ratio of the large diameter b to the small diameter b/a being between 1 and 2000.

12. The optical fibre according to one of claims 1 to 11, in which the metallic nanostructures have a dielectric core surrounded by an external metallic shell with an outer diameter D of between 1 nm and 20 nm and a thickness t of the metallic shell of less than 5 nm, the ratio between the diameter of the dielectric core and the outer diameter ((D-2t)/D) being between 0.5 and 1.

13. The optical fibre according to one of claims 1 to 11, in which the metallic nanostructures have a metallic core, an internal dielectric shell and an external metallic shell, with an outer diameter D comprised between 1 nm and 20 nm and a thickness $t_2$ of the external metallic shell of less than 5 nm.

14. The optical fibre according to one of the previous claims, having a Raman Figure of Merit FOM greater than 10 $W^{-1}.dB^{-1}$ for a fibre length of less than 500 m, the Raman Figure of Merit being defined as the ratio between the Raman coefficient of the optical fibre $C_R$ and the losses in the optical fibre, the Raman coefficient $C_R$ of the optical fibre being defined as the ratio between the intrinsic Raman gain $g_R$ of the core material and the effective area $A_{eff}$ Of the optical fibre at the pump wavelength.

15. The optical fibre according to claim 14, having a Raman Figure of Merit FOM greater than 20 $W^{-1}.dB^{-1}$ for a fibre length of less than 500 m.

16. Optical amplifier comprising at least one portion of optical fibre according to one of claims 1 to 15.

17. Laser comprising at least one portion of optical fibre according to one of claims 1 to 15.

**Patentansprüche**

1. Durch induzierte Raman-Streuung (SRS) verstärkende Glasfaser mit einem Kern, der geeignet ist die Übertragung eines optischen Signals zu gewährleisten, und einem optischen Mantel, der den Kern umgibt und geeignet ist, das im Kern geleitete optische Signal einzugrenzen, wobei der Kern aus einer dielektrischen Matrix aufgebaut ist, die geeignet ist mit einer gegebenen Frequenz $\omega_{Raman}$ unter Einfluss eines Pumpsignals derart zu schwingen, dass das geleitete optische Signal durch den Raman-Effekt verstärkt wird, **dadurch gekennzeichnet, dass** die Glasfaser wenigstens eine Art metallischer Nanostruktur aufweist, die geeignet ist eine Oberflächenplasmonenresonanz SPR in der Glasfaser zu erzeugen, wobei die metallischen Nanostrukturen eine derartige Form und Zusammensetzung haben, dass die Frequenz ihrer Oberflächenplasmonenresonanz $\omega_{plasmon}$ mit der Frequenz des Pumpsignals $\omega_{pump}$ und/oder der Frequenz des in der Glasfaser geleiteten optischen Signals $\omega_{signal}$ übereinstimmt, wobei wenigstens eine der Dimensionen der metallischen Nanostrukturen zwischen 1 nm und 20 nm liegt und das gesamte Volumen der metallischen Nanostrukturen weniger als 2% des gesamten Volumens des Kerns der Glasfaser beträgt.

2. Glasfaser nach Anspruch 1, in der die metallischen Nanostrukturen im Kern der Glasfaser angeordnet sind.

3. Glasfaser nach Anspruch 2, in der die metallischen Nanostrukturen eine derartige Form und Zusammensetzung haben, dass die Bandbreite ihrer Oberflächenplasmonenresonanz größer als die Schwingungsfrequenz der dielektrischen Matrix $\omega_{Raman}$ des Kerns der Glasfaser ist.

4. Glasfaser nach einem der Ansprüche 1 bis 3, in der die metallischen Nanostrukturen in einem Ring des Mantels angeordnet sind, der den Kern der Glasfaser umgibt, wobei das optische Signal im Kern der Glasfaser und das Pumpsignal im Ring geleitet wird.

5. Glasfaser nach einem der Ansprüche 1 bis 4, in der die dielektrische Matrix des Kerns auf Siliziumoxid basiert.

6. Glasfaser nach einem der Ansprüche 1 bis 4, in der die dielektrische Matrix des Kerns auf Siliziumoxid basiert, und mit einem Element ausgewählt aus Germanium, Phosphor, Fluor, Bor, Aluminium, Tantal, Tellur oder einer Kombination davon dotiert ist.

7. Glasfaser nach einem der vorhergehenden Ansprüche, in der die metallischen Nanostrukturen ein Metall beinhalten, das aus Gold, Silber, Kupfer, Aluminium, Wolfram, Nickel, Palladium, Rhodium, Iridium, Ruthenium, Molybdän, Osmium, Platin oder einer Kombination davon ausgewählt ist.

8. Glasfaser nach einem der vorhergehenden Ansprüche, in der die metallischen Nanostrukturen eine Schmelztemperatur größer oder gleich 950°C haben.

9. Glasfaser nach einem der vorhergehenden Ansprüche, in der die metallischen Nanostrukturen eine Siedetemperatur größer oder gleich 2100°C haben.

10. Glasfaser nach einem der Ansprüche 1 bis 9, in der die metallischen Nanostrukturen eine sphärische Form mit einem Durchmesser zwischen 1 nm und 10 nm haben.

11. Glasfaser nach einem der Ansprüche 1 bis 9, in der die metallischen Nanostrukturen eine ovale Form haben, wobei der kleine Durchmesser a zwischen 1 nm und 10 nm ist und das Verhältnis des großen Durchmessers b zum kleinen Durchmesser b/a zwischen 1 und 2000 ist.

12. Glasfaser nach einem der Ansprüche 1 bis 11, in der die metallischen Nanostrukturen einen von einer äußeren metallischen Hülle umgebenen dielektrischen Kern mit einem Außendurchmesser D zwischen 1 nm und 20 nm haben und einer Stärke t der metallischen Hülle kleiner als 5 nm, wobei das Verhältnis zwischen dem Durchmesser des dielektrischen Kerns und dem Außendurchmesser ((D-2t)/D) zwischen 0,5 und 1 ist.

13. Glasfaser nach einem der Ansprüche 1 bis 11, in der die metallischen Nanostrukturen einen metallischen Kern, eine innere dielektrische Hülle und eine äußere metallische Hülle haben, wobei der Außendurchmesser D zwischen 1 nm und 20 nm ist und eine Stärke $t_2$ der äußeren metallischen Hülle kleiner als 5 nm ist.

14. Glasfaser nach einem der vorhergehenden Ansprüche, mit einem Raman Gütefaktor FOM größer als 10 $W^{-1}.dB^{-1}$ für eine Faserlänge von weniger als 500 m, wobei der Raman Gütefaktor als das Verhältnis zwischen dem Raman Koeffizienten der Glasfaser $C_R$ und den Verlusten in der Glasfaser definiert ist, wobei der Raman Koeffizient $C_R$ der Glasfaser als das Verhältnis zwischen der intrinsischen Ramanverstärkung $g_r$ des Kernmaterials und der effektiven Fläche $A_{eff}$ der Glasfaser bei Pumpwellenlänge definiert ist.

15. Glasfaser nach Anspruch 14, die einen Raman Gütefaktor FOM größer als 20 $W^{-1}.dB^{-1}$ für eine Faserlänge von weniger als 500 m hat.

16. Optischer Verstärker, der wenigstens einen Teil Glasfaser gemäß einem der Ansprüche 1 bis 15 umfasst.

17. Laser, der wenigstens einen Teil Glasfaser gemäß einem der Ansprüche 1 bis 15 umfasst.

## Revendications

1. Fibre optique amplificatrice à effet Raman stimulé SRS comprenant une âme capable d'assurer la transmission d'un signal optique et une gaine optique entourant l'âme et capable de confiner le signal optique transmis dans l'âme, l'âme étant composée d'une matrice diélectrique capable de vibrer à une fréquence donnée $\omega_{Raman}$ sous l'effet d'un signal de pompe de telle sorte que le signal optique transmis est amplifié par effet Raman, **caractérisée en ce que** la fibre optique comprend au moins un type de nanostructure métallique capable de générer une résonance plasmonique de surface SPR dans la fibre optique, les nanostructures métalliques ayant une forme et une composition telles que la fréquence de leur résonance plasmonique de surface $\omega_{plasmon}$ correspond à la fréquence du signal de pompe $\omega_{pump}$ et/ou à la fréquence du signal optique transmis dans la fibre optique $\omega_{signal}$, au moins une des dimensions desdites nanostructures métalliques étant comprise entre 1 nm et 20 nm, et le volume total des nanostructures métalliques étant inférieur à 2 % du volume total de l'âme de la fibre optique.

2. Fibre optique selon la revendication 1, dans laquelle les nanostructures métalliques sont agencées dans l'âme de la fibre optique.

3. Fibre optique selon la revendication 2, dans laquelle les nanostructures métalliques ont une forme et une composition telles que la largeur de bande de leur résonance plasmonique de surface est supérieure à la fréquence de vibration de la matrice diélectrique $\omega_{Raman}$ de l'âme de la fibre optique.

4.   Fibre optique selon l'une des revendications 1 à 3, dans laquelle les nanostructures métalliques sont agencées en anneau de la gaine entourant l'âme de la fibre optique, le signal optique étant transmis dans l'âme de la fibre optique et le signal de pompe étant transmis dans l'anneau.

5.   Fibre optique selon l'une des revendications 1 à 4, dans laquelle la matrice diélectrique de l'âme est à base de silice.

6.   Fibre optique selon l'une des revendications 1 à 4, dans laquelle la matrice diélectrique de l'âme est à base de silice, dopée avec un élément choisi parmi le germanium, le phosphore, le fluor, le bore, l'aluminium, le tantale, le tellure ou une combinaison de ces derniers.

7.   Fibre optique selon l'une des revendications précédentes, dans laquelle les nanostructures métalliques comprennent un métal choisi parmi l'or, l'argent, le cuivre, l'aluminium, le tungstène, le nickel, le palladium, le rhodium, l'iridium, le ruthénium, le molybdène, l'osmium, le platine ou une combinaison de ces derniers.

8.   Fibre optique selon l'une des revendications précédentes, dans laquelle les nanostructures métalliques ont une température de fusion supérieure ou égale à 950 °C.

9.   Fibre optique selon l'une des revendications précédentes, dans laquelle les nanostructures métalliques ont une température d'évaporation supérieure ou égale à 2 100 °C.

10.  Fibre optique selon l'une des revendications 1 à 9, dans laquelle les nanostructures métalliques ont une forme sphérique avec un diamètre compris entre 1 nm (nanomètre) et 10 nm.

11.  Fibre optique selon l'une des revendications 1 à 9, dans laquelle les nanostructures métalliques ont une forme ovale, le petit diamètre a étant entre 1 nm et 10 nm et le rapport entre le grand diamètre b et le petit diamètre b/a étant entre 1 et 2 000.

12.  Fibre optique selon l'une des revendications 1 à 11, dans laquelle les nanostructures métalliques ont une âme diélectrique entourée par une enveloppe métallique externe avec un diamètre externe D entre 1 nm et 20 nm et une épaisseur t de l'enveloppe métallique inférieure à 5 nm, le rapport entre le diamètre de l'âme diélectrique et le diamètre externe ((D - 2t)/D) étant entre 0,5 et 1.

13.  Fibre optique selon l'une des revendications 1 à 11, dans laquelle les nanostructures métalliques ont une âme métallique, une enveloppe diélectrique interne et une enveloppe métallique externe, avec un diamètre interne D compris entre 1 nm et 20 nm et une épaisseur $t_2$ de l'enveloppe métallique externe de moins de 5 nm.

14.  Fibre optique selon l'une des revendications précédentes, ayant un facteur de mérite FOM Raman supérieur à 10 $W^{-1}$. $dB^{-1}$ pour une longueur de fibre inférieure à 500 m, le facteur de mérite Raman étant défini comme le rapport entre le coefficient Raman de la fibre optique $C_R$ et les pertes dans la fibre optique, le coefficient Raman $C_R$ de la fibre optique étant défini comme le rapport entre le gain intrinsèque Raman $g_R$ du matériau d'âme et la zone efficace $A_{eff}$ de la fibre optique au niveau de la longueur d'onde de pompe.

15.  Fibre optique selon la revendication 14, ayant un facteur de mérite FOM Raman supérieur à 20 $W^{-1}.dB^{-1}$ pour une longueur de fibre de moins de 500 m.

16.  Amplificateur optique comprenant au moins une portion de fibre optique selon l'une des revendications 1 à 15.

17.  Laser comprenant au moins une portion de fibre optique selon l'une des revendications 1 à 15.

## Fig 1

Fig. 2

Fig. 3

Fig. 4

Fig. 5

## Fig. 6

# Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001255564 A
- US 6608716 A
- US 7123359 A
- US 6807323 A
- EP 1347545 A
- WO 2007020362 A

### Non-patent literature cited in the description

- **J. AZIPURA et al.** Optical Properties of Gold Nanorings. *Physical Review Letters,* 07 February 2003, vol. 90 (5
- **S.J. OLDENBURG et al.** Nanoengineering of optical resonances. *Chemical Physics Letters,* 22 May 1998, 243-247
- **E. PRODAN et al.** A Hybridation Model for the Plasmon Response of Complex Nanostructures. *Science,* 17 October 2003, vol. 302
- **HUI WANG et al.** Symmetry breaking in individual plasmonic nanoparticles. *PNAS,* 18 July 2006, vol. 103 (29
- **R.L. GARELL'S.** Surface-Enhanced Plasmon Raman Spectroscopy. *Analytical Chemistry,* 1989, vol. 61, 401-411
- **J. KALKMAN et al.** Surface plasmon polariton modified emission of erbium in a metallodielectric grating. *Applied Physics Letters,* 07 July 2003, vol. 83 (1
- **J. KALKMAN et al.** Coupling of Er ions to surface plasmons on Ag. *Applied Physics Letters,* 2005, vol. 86, 041113-13
- **H. MERTENS et al.** Plasmon-enhanced erbium luminescence. *Applied Physics Letters,* 2006, vol. 89, 211107-13